# EUROPÄISCHE PATENTSCHRIFT

(11) **EP 0 690 202 B1**
(45) Veröffentlichungstag und Bekanntmachung des Hinweises auf die Patenterteilung: **01.08.2001**
(21) Anmeldenummer: 95109762.5
(22) Anmeldetag: 23.06.1995
(51) Int. Cl.: F01D 5/08

(54) **Einrichtung zur Abscheidung von Fremdpartikeln aus der den Laufschaufeln einer Turbine zuzuführenden Kühlluft**
Arrangement to separate dirt particles from the cooling air for the rotor blades of a turbine
Arrangement pour la séparation des particules de poussière de l'air de refroidissement des aubes de turbine

(30) Priorität: 30.06.1994 DE 4422965
(43) Veröffentlichungstag der Anmeldung: 03.01.1996
(73) Patentinhaber: MTU Aero Engines GmbH, 80995 München (DE)
(72) Erfinder: Zimmermann, Horst, D-80992 München (DE); Krauss, Olaf, D-85253 Kleinberghofen (DE)
(74) Vertreter: Einsele, Rolf W.

(56) Entgegenhaltungen:
- US-A- 3 356 340
- US-A- 3 751 907
- US-A- 3 918 835
- US-A- 4 199 933
- US-A- 4 309 147
- US-A- 4 348 157
- US-A- 4 798 047
- US-A- 4 820 123
- US-A- 4 896 510
- US-A- 5 222 693

## Beschreibung

Die Erfindung bezieht sich auf eine Einrichtung zur Abscheidung von Fremdpartikeln nach dem Oberbegriff des Patentanspruchs 1.

Zur Turbinenkühlung, z.B. Laufschaufelkühlung, wird in der Regel an geeigneter Stelle aus dem Verdichter entnommene Druckluft verwendet. Beim Triebwerksbetrieb, insbesondere in stark sand-oder staubhaltigen Regionen, liegt eine demgemäß ausgeprägte Partikelbelastung der vom Verdichter aus der Umgebung angesaugten Luft und damit auch der Schaufelkühlluft vor. Die von der Kühlluft mitgeführten Partikel verursachen eine Verstopfung der im Regelfall mit verhältnismäßig kleinen Durchströmquerschnitten ausgestatteten Kühlluftbohrungen in den Laufschaufeln; damit gehen u.a. unzulässige Temperaturerhöhungen der Schaufeln einher, die die Lebensdauerwartung der Schaufeln drastisch reduzieren. Je nach Anwendungsfall können die derart betroffenen Kühlluftbohrungen z.B. im wesentlichen radial bzw. über die gesamte Schaufelblatthöhe hinweg im Schaufelfleisch oder z.B. in sogenannten "Kühleinsätzen" angeordnet sein, aus denen die Kühlluft als "Prall-Kühlluft" örtlich gezielt gegen innere Wandregionen des Schaufelmantels ausgeblasen wird.

Die US-A- 3 918 835 schützt eine gattungsgemäße Einrichtung zur Abscheidung von Fremdpartikeln, bei der die zu reinigende Kühlluft nach ihrem Austritt aus stationären Dralldüsen (30) frei in dem zwischen Rotor (10) und Stator (26) vorhandenen Ringraum (28) strömen kann, wobei der Kühlluftdrall und die Zentrifugalwirkung des Rotors eine Strömungsbewegung mit einer radial nach außen gerichteten Komponente hervorrufen. Der Ringraum (28) wird umfangsseitig von einer Labyrinthdichtung begrenzt, die rotorseitig aus einem Dichtspitzen (22) tragenden Steg (21), statorseitig aus einem mit letzterem überlappenden Steg (24) besteht. Die innere Oberfläche des Steges (21) erweitert sich axial konisch von der Laufradscheibe (10) weg. In der Laufradscheibe (10) sind vorwiegend radiale Kanäle (18) für die Kühlluft vorhanden, die im Übergangsradius von der Laufradscheibe (10) zum Steg (21) in den Ringraum (28) münden. Die Mündungen (20) der Kanäle (18) stehen ringwulstförmig vor, um keine sich auf benachbarten Oberflächen ablagernde Fremdpartikel in die Kanäle (18) zu leiten. Dies kann jedoch nicht verhindern, dass frei fliegende Fremdpartikel direkt in die Kanäle (18) gelangen und diese ggf. versperren. Somit bietet dieser Vorschlag keinen optimalen Abscheidungseffekt.

Aus der Patentschrift US-A- 5 222 693 ist eine Einrichtung zur Abscheidung von Fremdpartikeln bekannt, die einen sehr speziellen, auf der Laufradscheibe (30) befestigten Partikelabscheider (28) vorsieht. Letzterer weist in seinem Inneren eine oder mehrere über seinen Umfang verteilte Labyrinthkammern (48,52,54) mit axialen Luftein- und -auslässen (42,46) sowie mit radialen Partikelauslässen (44) auf. Es ist davon auszugehen, dass die Kühlluft dabei sehr stark gedrosselt und verwirbelt wird, und sich außerdem stromab des Partikelabscheiders (28) eine inhomogene Strömungsverteilung ergibt. Bei effektiver Partikelabscheidung wird hier leider die Kühlwirkung erheblich verschlechtert.

Die US-A- 4 348 157 schützt eine Turbine mit luftgekühlten Schaufeln, bei der vom Verdichter kommende Kühlluft mittels Drallerzeuger (19) in Rotation versetzt und den Laufschaufeln im Fußbereich zugeführt wird. Ein radial von innen nach außen durch zwei Labyrinthdichtungen (23,24;26,27) verlaufender, den Kühlluftstrom kreuzender Leckluftstrom mit höherer Temperatur und höherem Druck wird über radialschaufelartige Kanäle am Laufrad weitgehend separat so geführt, dass der Kühlluftstrom möglichst wenig gestört wird. Partikelabscheidung ist hier kein Thema.

Der Erfindung liegt die Aufgabe zugrunde, eine Einrichtung zur Partikelabscheidung nach dem Oberbegriff des Patentanspruchs 1 anzugeben, die vergleichsweise einfach und gewichtlich leicht aufgebaut ist und die - unter Einschluss einer mit geringen Luft-, Umlenk- und Druckverlusten verbundenen Kühlluftführung - eine hocheffektive Partikelabscheidung und Schaufelkühlung ermöglicht.

Die gestellte Aufgabe ist mit den Merkmalen des Kennzeichnungsteils des Patentanspruchs 1 erfindungsgemäß gelöst. Die Erfindung nutzt die der Kühlluftströmung - vor ihrem Eintritt in die Kanäle für die Schaufelkühlung - aufgeprägte, in Umfangsrichtung rotierende Wirbelströmung zur Partikelabscheidung durch Zentrifugalkraft aus; indem die verwirbelte Kühlluft zunächst auf das etwa senkrecht gegenüber der Turbinen- bzw. Triebwerksachse abgewinkelte Umlenkblech trifft, können Fremdpartikel aus der rotierenden Strömung in den radial äußeren Teil des Ringraums abgeschleudert werden. Zusammen mit einem vergleichsweise geringen Sperrluftanteil aus der zugeführten Kühlluft können Fremdpartikel z.B. über eine radial äußere Rotor-Stator-Dichtung in den Turbinenkanal abfließen. Aus einer Position radial oberhalb des Umlenkbleches strömt die gereinigte Kühlluft stromab des Umlenkbleches in Richtung auf die Kanäle für die Schaufelkühlung ab. Auch stromab des Umlenkbleches ist die zugeführte Kühlluft einer in Umfangsrichtung rotierenden Wirbelströmung unterworfen, um die örtliche Scheibentemperatur zu reduzieren.

Die genannten Dralldüsen können über dem Umfang derart jeweils gleichmäßig schräg relativ zur Turbinenachse angestellte sein, daß der Kühlluftströmung eine Umfangskomponente im Drehsinne des Rotors aufgeprägt wird.

Im Wege der Partikelabscheidung nach der Erfindung ergeben sich praktisch keine nennenswerten Luftverluste der Kühlluftströmung. Je nach Anordnung liegen allenfalls vergleichsweise geringe Sperrluftverluste vor, die sich aus dem Vorhandensein radial äußerer und/oder innerer Absperrdichtungen des Ringraums zwischen Stator und Rotor bzw. Radscheibe ergeben.

Im Rahmen der Erfindung (Anspruch 4) liegt eine insbesondere luftund druckverlustarme Kühlung der Laufschaufeln und der Leitschaufeln einer betreffenden Turbinenstufe vor. Dabei stellen die Leitschaufeln praktisch gekühlte "Führungsmittel" für die den Laufschaufeln zuzuführende Kühlluft dar; den Leitschaufeln wird dabei also die mittels einer Leitung aus dem Verdichter entnommene Luft als Kühlluft ohne Luft- und Druckverluste zugeführt.

Das für die Partikelabscheidung vorgesehene Umlenkblech stellt ein einfach herstellbares, gewichtlich leichtes Bauteil dar; es kann als Faser-Verbund-Bauteil (GFK;CFK) oder aus einem geeigneten keramischen Werkstoff gefertigt sein; es kann ferner einstückig ringförmig gefertigt oder aus Segmenten zu einem Ringbauteil zusammengesetzt sein.

Mit einem axialen Teil kann das Umlenkblech verhältnismäßig einfach am Stator bzw. an einem Wandteil des Trägers der Leitschaufeln (Anspruch 7) betriebssicher z.B. über einen axialen Umfangsschlitz verankert bzw. verklemmt werden; dabei können zusätzlich lösbare Befestigungsmittel (z.B. Schrauben) für das Umlenkblech am Wandteil vorgesehen sein.

Ferner besteht die Möglichkeit, an einem axial vorspringenden Teil des Wandteils mit den Dralldüsen örtlich abgestufte Abschnitte vorzusehen, an denen das Umlenkblech hinsichtlich variabler Einbauhöhe und -tiefe zentrier- und festlegbar wäre.

Vorteilhafte Ausgestaltungen des Grundgedankens der Erfindung nach Anspruch 1 gehen konkret im übrigen aus den Merkmalen der Patentansprüche 2 bis 11 hervor.

Anhand eines Ausführungsbeispiels ist die Erfindung in den Zeichnungen weiter erläutert; es zeigen:
- Fig. 1: die Abscheideeinrichtung in Kombination mit einer Kühlluftführung über die Leitschaufeln und Teile des Turbinenstators hinweg in die Laufschaufeln einer Radscheibe bei einer einstufigen Hochdruckturbine eines Gasturbinentriebwerks und als Mittellängsschnitt dargestellt,
- Fig. 2: eine in die Zeichnungsebene projizierte Schnittabwicklung der Dralldüsen aus Fig. 1, gemäß Blickrichtung x, an einem umfangsseitig abgebrochenen Wandteil des Turbinenstators,
- Fig. 3: eine insbesondere hinsichtlich der Anordnung und Gestaltung des Umlenkbleches erste Abwandlung der Einrichtung nach Fig. 1 und mit durch örtlichen Bauteilabbruch am Stator und Rotor auf das Wesentliche reduzierter Gestaltung der Einrichtung, als Mittellängsschnitt dargestellt und
- Fig. 4: eine im wesentlichen auf zwei weitere Gestaltungsalternativen und Anordnungsmöglichkeiten der Umlenkbleche durch weiteren örtlichen Bauteilabbruch gegenüber Fig.3 auf das Wesentliche reduzierte und als Mittellängsschnitt dargestellte Einrichtung.

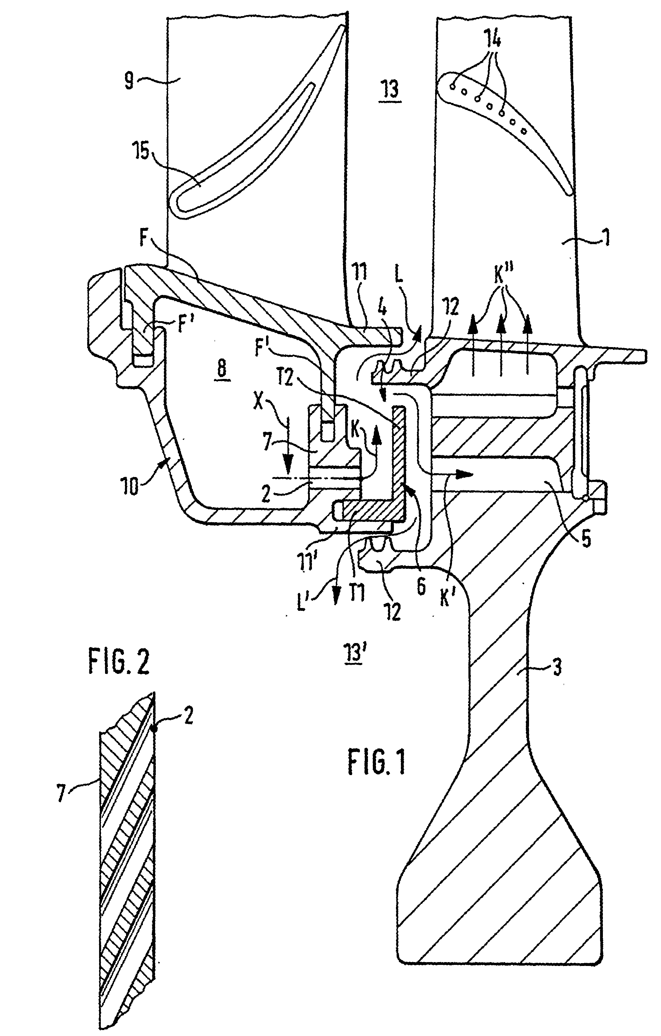

Fig. 1 und 2 veranschaulichen die Einrichtung zur Abscheidung von Fremdpartikeln aus der den Laufschaufeln 1 einer Hochdruckturbine zuzuführende Kühlluft. Dabei wird die Kühlluft über stationäre Dralldüsen 2 einem zwischen Wanteilen des Turbinenstators und einer Laufradscheibe 3 ausgebildeten Ringraum 4 als in Umfangsrichtung rotierende Wirbelströmung zugeführt; der Ringraum 4 steht stromab mit etwa in Höhe der Dralldüsen 2 in der Radscheibe 3 angeordneten Kanälen 5 für die Zufuhr der Kühlluft in die Laufschaufeln 1 in Verbindung innerhalb des Ringraums 4 erstreckt sich ein festes Umlenkblech 6 mit dem die aus den Dralldüsen 2 austretende Kühlluft K vor dem Eintritt in die Kanäle 5 - einseitig radial so umgelenkt wird, daß Fremdpartikel in einen radial äußeren Teil des Ringraums 4 abgeschleudert und zusammen mit einem Sperrluftanteil L der zugeführten Kühlluft K aus dem Ringraum 4 über eine radial äußere Absperrdichtung in den Turbinenkanal 13 abgeschieden werden. Die Dralldüsen 2 sind in einem Wandteil 7 des Stators angeordnet und von axialen Durchbrüchen gebildet, die gleichmäßig über dem Umfang verteilt und jeweils gleichmäßig schräg zur Turbinen- oder Triebwerksachse angesellt sind.

Auf ihrer Eintrittsseite stehen die Dralldüsen 2 mit einer Ringkammer 8 des Turbinenstators in Verbindung, die für die Kühlluftzufuhr in den Ringraum 4 mittels aus dem Hochdruckverdichter des Triebwerks entnommener Luft beaufschlagt ist. Die Ringkammer 8 wird teilweise von Partien F,F' hohler, innen gekühlter Leitschaufeln 9 der betreffenden Hochdruck-Turbinenstufe ausgebildet; auch wird die Ringkammer 8 teilweise von einem Träger 10 dieser Leitschaufeln 9 ausgebildet ist, der das eine Wandteil 7 mit den Dralldüsen 2 aufweist. Es wird also mittels einer Leitung Luft an geeigneter Stelle aus dem Hochdruckverdichter entnommen und als Kühlluft über die Leitschaufeln 9 der Ringkammer 8 und von dort über die Dralldüsen 2 dem Ringraum 4 zugeführt.

Wie ferner der Fig. 1 entnommen werden kann, ist der Ringraum 4 radial außen und innen von Abschnitten axial vorspringender Stege 11,11' bzw. 12,12' des Stators und der Radscheibe 3 eingegrenzt ; diese Stege bilden mit einer sich in Umfangsrichtung überlappenden Anordnung hier z.B. labyrinthartige Absperrdichtungen gegenüber Räumen im Triebwerk aus, in denen ein niedrigerer Druck als derjenige im Ringraum 4 herrscht.

Bei dem einen Raum handelt es sich hier um den schon erwähnten Turbinenkanal 13. Es steht der Ringraum 4 radial außen über die betreffende Absperrdichtung zwischen dem Stator und der Radscheibe 3 bzw. zwischen den Stegen 11,12 mit dem Turbinenkanal 13, vor den Laufschaufeln 1 der Hochdruckstufe, in Verbindung. Gemäß Pfeil L' strömt ein weiterer Sperrluftanteil aus der dem Ringraum 4 zugeführten Kühlluft K radial innen zwischen den Stegen 11',12' der auch hier z.B. labyrinthartigen Absperrdichtung in den anderen Raum 13' ab, der u.a. im wesentlichen zwischen Abschnitten des Stators und der Radscheibe 3 bzw. des radial inneren Wellensystems ausgebildet ist.

Das Umlenkblech 6 ist ringförmig ausgebildet und mit einem axialen Teil T1 radial unterhalb der Dralldüsen 2 am betreffenden Wandteil 7 des Leitschaufelträgers 10 verankert. Mit einem gegenüber dem axialen radial abgewickelten Teil T2 ist das Umlenkblech 6 axial mit Abstand gegenüber den Austrittsöffnungen der Dralldüsen 2 angeordnet; mit einer äußeren Endkante am radialen Teil T2 verläuft das Umlenkblech 6 mit Abstand gegenüber einem den Ringraum 4 radial außen teilweise eingrenzenden Steg 12 der Radscheibe 3.

Gemäß Fig. 1, 3 und 4 wird davon ausgegangen, daß die jeweiligen Laufschaufeln 1 mit ihren Schaufelfüßen mittels Axialnuten an der Radscheibe 3 verankert sind. Jeder Kanal 5 erstreckt sich zwischen dem Nutgrund und dem radial inneren Fußende. Die jedem Kanal 5 aus dem Ringraum 4 zugeführte, gereinigte Kühlluft K' wird über weitere im betreffenden Schaufelfuß enthaltene Zuführbohrungen gemäß Pfeilfolge K'' einzelnen Kühlkanälen 14 im betreffenden Schaufelblatt der Laufschaufel 1 zugeführt. Über die betreffende Schaufelspitze kann die Kühlluft in den Turbinenkanal 13 abgeblasen werden.

Die Leitschaufeln 9 sind radial außen am Turbinengehäuse fest verankert. Radial innen sind die Leitschaufeln 9 über betreffende deckbandseitige Segmentplatten F und Stege F' an Umfangsnuten des Leitschaufelträgers 10 gehalten. Für die Kühlluftführung und Kühlung weisen die Blätter der Laufschaufeln 9 einen in sich geschlossenen, auf die äußere Blattgeometrie abgestimmten Innenkanal 15 auf. Der Innenkanal 15 jeder Leitschaufel 9 kann mit einem in das Turbinengehäuse am Umfang integrierten Ringkanal in Verbindung stehen, an den das stromabwärtige Ende einer Entnahmeleitung angeschlossen ist.

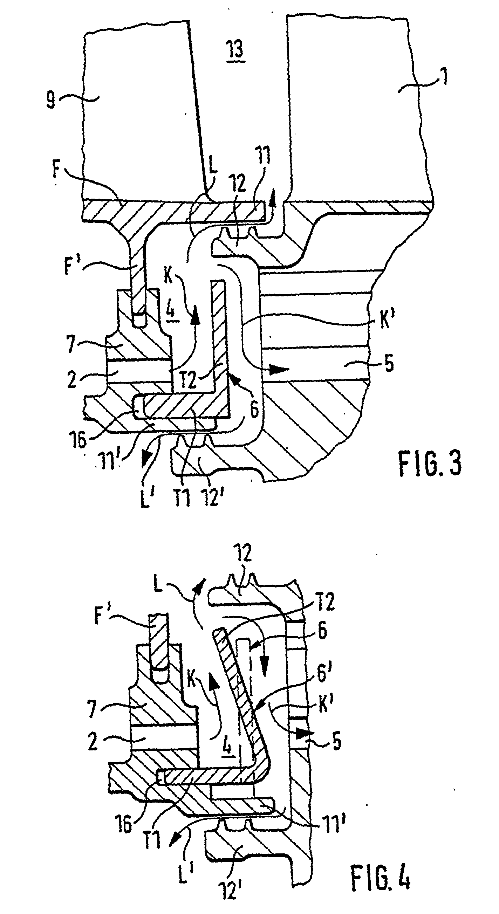

Gemäß Fig. 3 ist das Umlenkblech 6 im Ringraum 4 derart ausgebildet und angeordnet, daß die freie umfangsseitige Endkante des vom axialen Teil T1 etwa senkrecht abgewickelten Teils T2 mit Abstand im wesentlichen unterhalb des umfangsseitigen Endes des in den Ringraum 4 hineinragenden Steges 12 der Radscheibe 3 verläuft. Unter Bereitstellung des aerodynamisch notwendigen Volumens im Ringraum 4 u.a. vor bzw. hinter dem abgewinkelten Teil T2, kann so eine noch gezieltere Partikelabschleuderung in Richtung auf den radial äußeren Wandbereich des Ringraums 4 erzielt werden; im Wege des abfließenden Sperrluftanteils L kann so die Partikelabscheidung intensiviert werden.

Eine Optimierung der Partikelabscheidung im Sinne der Fig. 3 kann gemäß Fig. 4 auch dadurch erzeugt werden, daß der eine Teil T2 des Umlenkbleches 6' gegenüber dem axialen Teil T1 und, relativ zur axialen Erstreckung der Dralldüsen 2, schräg abgewinkelt verläuft; letzteres so, daß die freie umfangsseitige Endkante des abgewinkelten Teils T2 auf den Verlauf der umfangsseitigen Endkante des Steges 12 der Absperrdichtung ausgerichtet ist.

Im Wege des gestrichelt gezeichneten Umlenkbleches 6, praktisch identisch mit demjenigen nach Fig. 1 und 3, verkörpert Fig. 4 eine zusätzliche Alternative der Einrichtung, wonach das Umlenkblech 6 an einer gegenüber dem Umfangsschlitz 16 versetzten Abstufung am axial vorspringenden Steg 11' zentrier- und lösbar festlegbar wäre. Ferner schließt diese Alternative Bauweise die Möglichkeit ein, das schräg abgewinkelte Umlenkblech 6' durch das Umlenkblech 6 zuersetzen, wenn dieses sich im Rahmen bestimmter aerodynamischer Anforderungen als notwendig und nützlich erweisen sollte. Im übrigen ist gemäß Fig. 1 und 3 der betreffende axiale Teil T1 des Umlenkbleches 6 ebenfalls an einem Umfangsschlitz 16, der sich auf der einen Seite im axial vorspringenden Steg 11' fortsetzt, zentriert und festgelegt bzw. verklemmt.

Sofern nicht bereits ausdrücklich beansprucht, sind die zuvor benannten und/oder zeichnerisch verkörperten Merkmale der Einrichtung ebenfalls Bestandteil der Erfindung.

## Patentansprüche

1. Einrichtung zur Abscheidung von Fremdpartikeln aus der den Laufschaufeln (1) einer Turbine zuzuführenden Kühlluft, insbesondere für Gasturbinentriebwerke, bei welcher die Kühlluft über stationäre Dralldüsen (2) einem zwischen Wandteilen eines Turbinenstators und einer Radscheibe (3) ausgebildeten Ringraum (4) als in Umfangsrichtung rotierende Wirbelströmung zugeführt wird, und der Ringraum (4) mit in der Radscheibe (3) angeordneten Kanälen (5) für die Zufuhr der Kühlluft in die Laufschaufeln (1) in Verbindung steht,
dadurch gekennzeichnet,
dass innerhalb des Ringraums (4) ein Umlenkblech (6) befestigt ist, mit dem die aus den Dralldüsen (2) austretende Kühlluft - vor dem Eintritt in die Kanäle (5) - einseitig so umgelenkt wird, dass Fremdpartikel in einen radial äußeren Teil des Ringraums (4) abgeschleudert und zusammen mit einem Sperrluftanteil der zugeführten Kühlluft aus dem Ringraum (4) abgeschieden werden.

2. Einrichtung nach Anspruch 1, dadurch gekennzeichnet, dass die Dralldüsen (2) von in einem Wandteil (7) des Stators angeordneten, axialen Durchbrüchen gebildet sind, die gleichmäßig über den Umfang verteilt und schräg zur Turbinen- oder Triebwerksachse angestellt sind.

3. Einrichtung nach Anspruch 1 oder 2, dadurch gekennzeichnet, daß die Dralldüsen (2) auf ihrer Eintrittsseite mit einer Ringkammer (8) des Stators in Verbindung stehen, die für die Kühlluftzufuhr in den Ringraum (4) mittels aus dem Hochdruckverdichter des Triebwerks entnommener Luft beaufschlagt ist.

4. Einrichtung nach Anspruch 2 und 3, dadurch gekennzeichnet, daß die Ringkammer (8) teilweise von den Deckband- und und Stützpartien hohler, innen gekühlter Leitschaufeln (9) der betreffenden Turbinenstufe ausgebildet und teilweise von einem Träger (10) dieser Leitschaufeln (9) ausgebildet ist, der das eine Wandteil (7) mit den Dralldüsen (2) aufweist, wobei die aus dem Hochdruckverdichter entnommene Luft als Kühlluft über die Leitschaufeln (9) der Ringkammer (8) und von dort über die Dralldüsen (2) dem Ringraum (4) zugeführt wird.

5. Einrichtung nach einem oder mehreren der Ansprüche 1 bis 4, dadurch gekennzeichnet, daß der Ringraum (4) radial außen und innen von Abschnitten axial vorspringender Stege (11,11'; 12,12') des Stators und der Radscheibe (3) eingegrenzt ist, wobei die Stege mit einer sich in Umfangsrichtung überlappenden Anordnung Absperrdichtungen gegenüber Räumen im Triebwerk ausbilden, in denen ein niedrigerer Druck als derjenige im Ringraum (4) herrscht.

6. Einrichtung nach Anspruch 1 oder 5, dadurch gekennzeichnet, daß der Ringraum (4) radial außen über eine Absperrdichtung zwischen dem Stator und der Radscheibe (3) mit dem Turbinenkanal (13), insbesondere vor den Laufschaufeln (1) der betreffenden Turbinenstufe, in Verbindung steht.

7. Einrichtung nach einem oder mehreren der Ansprüche 1 bis 6, dadurch gekennzeichnet, daß das Umlenkblech (6) ringförmig ausgebildet ist und mit einem axialen Teil (T1) radial unterhalb der Dralldüsen (2) am betreffenden Wandteil (7) des Stators bzw. Leitschaufelträgers (10) verankert ist und mit einem abgewinkelten Teil (T2) axial mit Abstand gegenüber den Austrittsöffnungen der Dralldüsen (2) angeordnet ist und mit einer äußeren Endkante am abgewinkelten Teil (T2) mit Abstand gegenüber einem den Ringraum (4) radial außen teilweise eingrenzenden Steg (12) der Radscheibe (3) verläuft.

8. Einrichtung nach Anspruch 7, dadurch gekennzeichnet, daß der eine Teil (T2) der Umlenkbleches (6') gegenüber dem axialen Teil (T1) und, relativ zur axialen Erstreckung der Dralldüsen (2), schräg abgewinkelt ist, wobei die freie äußere Endkante des einen abgewinkelten Teils (T2) in Richtung auf den Verlauf der umfangsseitigen Endkante des einen Steges (12) der radial äußeren Absperrdichtung ausgerichtet ist

9. Einrichtung nach einem oder mehreren der Ansprüche 1 bis 8,
dadurch gekennzeichnet, daß das Umlenkblech (6) mit seinem axialen Teil (T1) an relativ gegeneinander abgestuften Umfangsabschnitten des Wandteils (7) mit dem einen Steg (11') hinsichtlich variabler Einbauhöhe und -tiefe lösbar festlegbar ist.

10. Einrichtung nach einem oder mehreren der Ansprüche 1 bis 9, dadurch gekennzeichnet, daß das UmlenkbTech (6,6') aus einem durch Kohleoder Glasfasern verstärkten Kunststoff gefertigt ist.

11. Einrichtung nach einem oder mehreren der Ansprüche 1 bis 9, dadurch gekennzeichnet, daß das Umlenkblech (6,6') aus einem keramischen Werkstoff, z.B. Siliciumkarbid oder Siliciumnitrid, gefertigt ist.

## Claims

1. A device for removing foreign particles from the cooling air delivered to the blades (1) of a turbine, in particular for gas turbine systems, in which the cooling air is fed through stationary helical nozzles (2), as a swirling flow rotating in a circumferential direction, to an annular space (4) formed between wall parts of a turbine stator and a wheel disk (3), and the annular space (4) communicates with passages (5) in the wheel disk (3) for delivering the cooling air to the blades (1), characterised in that a deflector plate (6) is mounted inside the annular space (4), by means of which the cooling air issuing from the helical nozzles (2) is deflected to one side - prior to entering the passages (5) - so that foreign particles are flung to a radially outer part of the annular space (4) and are removed from the annular space (4), with a portion of trapped air, from the cooling air.

2. Device as claimed in claim 1, characterised in that the helical nozzles (2) are formed by axial orifices disposed in a wall portion (7) of the stator, evenly distributed around the circumference, and are set at an angle relative to the turbine or drive axis.

3. Device as claimed in claim 1 or 2, characterised in that, at their inlet side, the helical nozzles (2) communicate with an annular chamber (8) of the stator, which is pressurised by means of air drawn from the high-pressure compressor of the drive system in order to deliver cooling air to the annular space (4).

4. Device as claimed in claim 2 and 3, characterised in that the annular chamber (8) is formed in part by the cover strip parts and supporting parts of hollow, internally cooled stationary blades (9) of the respective turbine stage and in part by a bearing (10) of these stationary blades (9) incorporating the one wall part (7) having the helical nozzles (2), the air drawn from the high-pressure compressor being delivered across the stationary blades (9) to the annular chamber (8) and from there through the helical nozzles (2) to the annular space (4).

5. Device as claimed in one or more of claims 1 to 4, characterised in that the annular space (4) is divided radially to the exterior and interior by sections of axially projecting platforms (11, 11'; 12, 12') of the stator and the wheel disk (3), the platforms providing seals, in an arrangement overlapping in the circumferential direction, shutting off compartments in the drive system in which the prevailing pressure is lower than that prevailing in the annular space (4).

6. Device as claimed in claim 1 or 5, characterised in that radially to the exterior, the annular space (4) communicates with the turbine passage (13) via a seal between the stator and the wheel disk (3), in particular before the blades (1) of the respective turbine stage.

7. Device as claimed in one or more of claims 1 to 6, characterised in that the deflector plate (6) is of an annular design and is anchored by an axial part (T1), radially underneath the helical nozzles (2), to the respective wall portion (7) of the stator or stationary blade baring (10) and has an upturned part (T2) disposed axially with a clearance from the outlet openings of the helical nozzles (2) and the upturned part (T2) extends to an outer terminal edge across a distance from a platform (12) of the wheel disk (3) partially compartmentalising the annular space (4) radially towards the exterior.

8. Device as claimed in claim 7, characterised in that the one part (T2) of the deflector plate (6') is disposed at an oblique angle relative to the axial part (T1) and relative to the axial extension of the helical nozzles (2), the free outer terminal edge of the one angled part (T2) being directed towards the contour of the circumference-side terminal edge of the one platform (12) of the radially outer seal.

9. Device as claimed in one or more of claims 1 to 8, characterised in that the deflector plate (6) can be detachably secured by its axial part (T1) to the one platform (11') at stepped circumferential portions of the wall part (7) so as to be variable in terms of mounting height and depth.

10. Device as claimed in one or more of claims 1 to 9, characterised in that the deflector plate (6, 6') is made from plastics reinforced with carbon or glass fibres.

11. Device as claimed in one or more of claims 1 to 9, characterised in that the deflector plate (6, 6') is made from a ceramic material, e.g. silicon carbide or silicon nitride.

## Revendications

1. Dispositif de séparation de particules étrangères issues de l'air de refroidissement fourni aux aubes mobiles (1) d'une turbine, en particulier dans des groupes propulseurs à turbine à gaz, dans lequel l'air de refroidissement est amené, sous forme d'écoulement tourbillonaire tournant dans la direction périphérique, par des buses de mise en rotation est amené, par des buses de mise en rotation (2) stationnaires, à un espace annulaire (4) réalisé entre des parties de parois d'un stator de turbine et un disque de roue (3), et l'espace annulaire (4) est relié à des canaux (5) ménagés dans le disque de roue (3), pour assurer l'amenée d'air de refroidissement dans les aubes mobiles (1), caractérisé en ce que,
à l'intérieur de l'espace annulaire (4) est fixée une tôle de renvoi (6), à l'aide de laquelle l'air de refroidissement, sortant des buses de mise en rotation (2) - avant entrée dans les canaux (5) - est dévié sur un côté, de manière que les particules étrangères soient éjectées dans une partie, radialement extérieure; de l'espace annulaire (4) et soient séparées pour être extraites hors de l'espace annulaire (4), conjointement avec une partie d'air de barrage de l'air de refroidissement fourni.

2. Dispositif selon la revendication 1, caractérisé en ce que les buses de mise en rotation (2) sont constituées par des passages axiaux, disposés dans une partie de paroi (7) du stator, passages répartis régulièrement sur la périphérie et inclinés obliquement par rapport à l'axe de la turbine ou du groupe propulseur.

3. Dispositif selon la revendication 1 ou 2, caractérisé en ce que les buses de mise en rotation (2) sont reliées sur leur côté entrée à une chambre annulaire (8) du stator, alimentée au moyen d'air prélevé dans le compresseur haute pression du groupe propulseur, pour assurer l'alimentation en air de refroidissement dans l'espace annulaire (4).

4. Dispositif selon les revendications 2 et 3, caractérisé en ce que la chambre annulaire (8) est réalisée partiellement par les parties de bande de couverture et d'appui des aubes directrices (9) creuses refroidies intérieurement de l'étage de turbine concerné et partiellement par un support (10), de ces aubes directrices (9), qui présente une partie de paroi (7) comportant les buses de mise en rotation (2), l'air prélevé du compresseur haute pression est amené, à titre d'air de refroidissement, par les aubes directrices (9) à la chambre annulaire (8) et, de là, par les buses de mise en rotativiste (2), à l'espace annulaire (4).

5. Dispositif selon une ou plusieurs des revendications 1 à 4, caractérisé en ce que l'espace annulaire (4) est limité radialement extérieurement et intérieurement par des tronçons de nervures (11, 11' ; 12, 12'), faisant saillie axialement, du stator et du disque de roue (3), les nervures constituant, par un agencement à chevauchement en direction périphérique, des joints d'étanchéité de barrage par rapport aux espaces ménagés dans le groupe propulseur, dans lesquels règne une pression inférieure à celle régnant dans l'espace annulaire (4).

6. Dispositif selon la revendication 1 ou 5, caractérisé en ce que l'espace annulaire (4) est relié radialement extérieurement, par l'intermédiaire d'un joint d'étanchéité de barrage, entre le stator et le disque de roue (3), au canal de turbine (13), en particulier avant les aubes mobiles (1) de l'étage de turbine concerné.

7. Dispositif selon une ou plusieurs des revendications 1 à 6, caractérisé en ce que la tôle de renvoi (6) est à forme annulaire et est ancrée, par une partie axiale T1, radialement au-dessous des buses de mise en rotation (2), sur la partie de paroi (7) concernée du stator ou le support d'aube directrice (10), et est disposée, par une partie (T2) coudée, axialement à distance par rapport a ouvertures de sortie des buses de mise en rotation (2) s'étend, par une arête d'extrémité extérieure sur la coudée (T2), à distance par rapport à une nervure (12), limitant radialement, extérieurement, partiellement par rapport à l'espace annulaire (4), du disque de roue (3).

8. Dispositif selon la revendication 7, caractérisé en ce qu'une partie (T2) de la tôle de renvoi (6') est coudée obliquement par rapport à la partie axiale (T1) et par rapport à l'étendue axiale des buses de mise en rotation (2), l'arête d'extrémité extérieure libre d'une partie coudée (T2) étant orienté en direction de l'allure de l'arête d'extrémité, située côté périphérie, d'une nervure (12) du joint d'étanchéité de barrage radialement extérieur.

9. Dispositif selon une ou plusieurs des revendications 1 à 8, caractérisé en ce que la tôle de renvoi (6) est susceptible d'être fixée, de façon désolidarisable, par sa partie axiale (T1), sur des tronçons périphériques étagés les uns par rapport aux autres de la partie de paroi (7), à une nervure (11'), la hauteur et la profondeur de montage étant variables.

10. Dispositif selon une ou plusieurs des revendications 1 à 9, caractérisé en ce que la tôle de renvoi (6, 6') est fabriquée dans une matière synthétique renforcée par des fibres de carbone ou des fibres de verre.

11. Dispositif selon une ou plusieurs des revendications 1 à 9, caractérisé en ce que la tôle de renvoi (6, 6') est fabriquée en un matériau céramique, par exemple du carbure de silicium ou du nitrure de silicium.
